(19) Europäisches Patentamt / European Patent Office / Office européen des brevets

(11) **EP 2 347 492 B1**

(12) **FASCICULE DE BREVET EUROPEEN**

(45) Date de publication et mention de la délivrance du brevet:
**25.02.2015 Bulletin 2015/09**

(21) Numéro de dépôt: **09736953.2**

(22) Date de dépôt: **19.10.2009**

(51) Int Cl.:
*H02J 3/18* (2006.01)    *H02M 7/49* (2007.01)

(86) Numéro de dépôt international:
**PCT/EP2009/063642**

(87) Numéro de publication internationale:
**WO 2010/046331 (29.04.2010 Gazette 2010/17)**

(54) **SYSTEME ET PROCEDE DE CONTROLE D'AU MOINS UN CONVERTISSEUR DE TENSION A PLUSIEURS CELLULES EN SERIE**

SYSTEM UND VERFAHREN ZUM STEUERN MINDESTENS EINES SPANNUNGSUMRICHTERS MIT MEHREREN ZELLEN IN REIHE

SYSTEM AND METHOD FOR CONTROLLING AT LEAST ONE VOLTAGE CONVERTER WITH SEVERAL CELLS IN SERIES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **21.10.2008 FR 0857130**

(43) Date de publication de la demande:
**27.07.2011 Bulletin 2011/30**

(73) Titulaire: **ALSTOM Technology Ltd**
**5400 Baden (CH)**

(72) Inventeurs:
• BENCHAIB, Abdelkrim
  F-78180 Montigny Le Bretonneux (FR)
• POULLAIN, Serge
  F-92190 Meudon (FR)

(74) Mandataire: **Ilgart, Jean-Christophe et al**
**BREVALEX**
**95, rue d'Amsterdam**
**75378 Paris Cedex 8 (FR)**

(56) Documents cités:
**EP-A- 0 911 950**

• BENCHAIB, A.; LEE-KWET-SUN, E.; THIERRY, J.-L.; DE PREVILLE, G.: "Industrial D-STATCOM chain link modelling and control" 2 septembre 2007 (2007-09-02), IEEE , CONFERENCE ON POWER ELECTRONICS AND APPLICATIONS 2007, , XP002535454 ISBN: 978-92-75815-10-8 cité dans la demande pages 1-9
• EL-MOURSI M S ET AL: "Novel Controllers for the 48-Pulse VSC STATCOM and SSSC for Voltage Regulation and Reactive Power Compensation" IEEE TRANSACTIONS ON POWER SYSTEMS, IEEE SERVICE CENTER, PISCATAWAY, NJ, US, vol. 20, no. 4, 1 novembre 2005 (2005-11-01), pages 1985-1997, XP011141700 ISSN: 0885-8950

**Description**

**DOMAINE TECHNIQUE**

L'invention concerne un système et un procédé de contrôle d'au moins un convertisseur de tension à plusieurs cellules en série, qui peut être un convertisseur de type « chain link STATCOM » (« STATic synchronous COMpensator » ou compensateur statique synchrone).

Pour simplifier la description on considère dans la suite, à titre d'exemple, un convertisseur de tension à plusieurs cellules en série de type « chain link STATCOM ».

**ÉTAT DE LA TECHNIQUE ANTÉRIEURE**

Dans un réseau de transport d'énergie très haute tension, l'électricité est produite par des alternateurs en courant alternatif triphasé, puis la tension est augmentée par des transformateurs élévateurs très haute tension avant d'être transmise sur le réseau. La très haute tension permet de transporter l'énergie sur de longues distances, tout en allégeant les structures et en minimisant les pertes par échauffement. Elle reste cependant limitée par des contraintes d'isolement des équipements et par des phénomènes de rayonnement électromagnétique. Le niveau de très haute tension offrant un bon compromis va de 400 kV à 800 kV.

Pour que la puissance puisse transiter entre une source et un récepteur, il faut que la tension de la source soit déphasée d'un angle $\theta$ par rapport à la tension du récepteur. Cet angle $\theta$ est appelé angle interne de la ligne ou angle de transmission.

En notant Vs la tension côté source, Vr la tension côté récepteur, et Xl l'impédance purement inductive de la ligne, les puissances active P et réactive Q fournies par la source ont respectivement pour expressions :

$$P = \frac{V_s V_r}{Xl}\sin\theta \qquad Q = \frac{V_s^2 - V_s V_r \cos\theta}{Xl} \qquad P_{max} = \frac{V_s V_r}{Xl}$$

Ces expressions montrent que les puissances active et réactive transmises sur une ligne inductive sont fonction des tensions Vs et Vr, de l'impédance Xl et de l'angle de transmission $\theta$.

Pour augmenter la puissance transmissible par la ligne, on peut donc agir de trois façons :

- Augmenter les tension Vs et Vr. On est alors vite limité par les distances d'isolement et le dimensionnement de l'installation. Le champ électromagnétique rayonné est plus important. Il y a donc un impact environnemental à prendre en compte. De plus le matériel est plus cher et la maintenance coûteuse.

- Agir sur l'angle de transmission $\theta$. Cet angle est fonction de la puissance active fournie par les sites de production. L'angle maximal correspondant à $P_{max}$ est $\theta = \pi/2$. Pour des angles supérieurs, on entre dans la partie descendance de la courbe P=f($\theta$), qui est une zone instable. Travailler avec des angles $\theta$ trop importants c'est risquer de perdre le contrôle du réseau, notamment dans le cas d'un défaut transitoire (par exemple mise à la terre des phases) sur le réseau où le retour à un fonctionnement normal entraîne une augmentation transitoire de l'angle de transmission (afin d'évacuer l'énergie produite pendant le défaut qui n'a pu être utilisée par la charge et a été emmagasinée sous forme d'énergie cinétique dans les rotors des générateurs). Il est alors impératif que cet angle ne dépasse pas la limite de stabilité.

- Agir sur la valeur de l'impédance Xl que l'on peut faire baisser en plaçant un condensateur en série avec la ligne, compensant ainsi la puissance réactive générée par la ligne de transport d'énergie. La valeur de l'impédance Xl baissant, la puissance transmissible augmente pour un même angle de transmission.

L'utilisation des systèmes FACTS (« Flexible Alternative Current Transmission Systems »), qui sont des dispositifs électroniques de puissance à grande vitesse de réponse contrôlant la puissance réactive, ouvre de nouvelles perspectives pour une exploitation plus efficace des réseaux électriques. Ils permettent une action continue et rapide sur les différents paramètres du réseau : déphasage, tension, impédance. Ainsi, les transferts de puissance sont mieux contrôlés et les tensions mieux tenues, ce qui permet d'augmenter les marges de stabilité et de tendre vers une exploitation des lignes de transport d'énergie par un transfert de courant maximum à la limite de la tenue thermique de ces lignes à haute et très haute tension.

Les FACTS peuvent être regroupés en deux familles : les FACTS parallèles et les FACTS série :

- Les FACTS parallèles regroupent notamment le MSC (« Mechanical Switched Capacitor »), le SVC (« Static Var Compensator ») et le STATCOM (« STATIC synchronous COMPensator »).
- Les FACTS série regroupent notamment le FC (« Fixed Capacitor »), le TSSC (« Thyristor Switched Serie Capacitor »), le TCSC (« Thyristor Controlled Serie Capacitor »), et le SSSC (« Static Synchronous Serie Compensator »).

Le STATCOM, connu comme étant le contrôleur de la puissance réactive du futur, peut être utilisé de la même manière qu'un compensateur synchrone (machine synchrone). Il peut fournir une compensation dynamique de la tension, augmenter la stabilité transitoire et améliorer l'amortissement d'un réseau de transport ou de distribution de l'énergie électrique.

Un STATCOM est un système d'électronique de puissance connecté en parallèle, qui injecte dans le réseau de transport d'énergie électrique un courant alternatif contrôlé en phase et en amplitude. L'amplitude des tensions modulées par le convertisseur (en phase avec les tensions réseau), permet d'absorber ou de fournir de la puissance réactive. Il permet ainsi de régler en dynamique la production ou la consommation de puissance réactive. Il est également capable d'amortir des oscillations de puissance en régime transitoire.

Le rôle principal d'un STATCOM est de fournir un support de tension en des points critiques d'un réseau de transport et de distribution électrique, en injectant un courant réactif dans le réseau électrique. En général, le courant réactif injecté par un STATCOM, est proportionnel à la différence de tension entre le STATCOM et le réseau. Par conséquent, le contrôle du courant réactif dépend du contrôle de la tension du convertisseur.

Une topologie STATCOM spécifique, basée sur l'assemblage de plusieurs cellules standard constituées de convertisseurs, est connue sous le nom de « Chain-Link STATCOM ». Outre le contrôle du courant réactif fourni par un tel convertisseur, le problème principal à résoudre est celui de la répartition de la tension globale sur chaque cellule de ce convertisseur.

Le document référencé [1] en fin de description présente une modélisation ainsi que des lois simplifiées d'un tel convertisseur « chain link STATCOM ». Mais :

- d'une part, compte tenu des approximations de modélisation et de commande, les lois de commande existantes ne présentent pas un grand degré de robustesse (variations paramétriques, harmoniques, ...) ainsi que de bonnes performances dynamiques, et
- d'autre part, il n'existe pas de méthode de commande analytique généralisée à un nombre N de cellules mises en série pour ce type de convertisseur (association de N cellules pont en H commandées en modulation à largeur d'impulsions ou MLI.

Le document référencé [3] en fin de description présente un mode de contrôle pour un tel convertisseur avec deux boucles de contrôle.

L'invention a pour objet de proposer un système et un procédé mettant en oeuvre une nouvelle loi de commande qui permet de mieux répartir la tension globale sur chaque cellule d'un convertisseur « chain link STATCOM ».

## EXPOSÉ DE L'INVENTION

L'invention concerne un système de contrôle d'au moins un convertisseur de tension à plusieurs cellules en série, dans lequel on délivre à chaque cellule les composantes module et phase d'une tension d'entrée Vei par rapport à un référentiel (d, q), comportant une partie AC et une partie DC, caractérisé en ce qu'il comprend une boucle de contrôle de courant à dynamique rapide concernant la partie AC qui délivre une tension de contrôle Ve, et une boucle de contrôle de tension à dynamique plus lente relative aux cellules qui délivre une puissance active $\psi i$ ; telle que :

$$\Psi_i = \frac{C_i}{2}\left( \frac{2}{R_{pi}C_i}Z_i + \frac{d}{dt}Z_{i\_ref} - K_{1zi}E_{Zi} - K_{2Zi}\,sign\left(E_{Zi}\right) \right)$$

où :

- $K_{1zi}$ et $K_{2zi}$ sont des gains d'ajustage positifs,
- $C_i$ : capacité continue du condensateur Ci de chaque cellule,
- $R_{pi}$ : pertes associées à chaque cellule,
- $Z_{i-ref}$ : valeur référencée de Zi=$(U_{DCi})^2$, $U_{DCi}$ étant la tension continue aux bornes du condensateur Ci,

- $E_{zi}$ : telle que $E_{zi}=Z_i-Z_{i\text{-ref}}$,

en ce que la liaison entre ces deux boucles de contrôle est obtenue via la consommation de puissance active dans les cellules qui représente la sortie de la boucle de contrôle à dynamique plus lente, et en ce qu'il comprend des moyens d'obtention d'une référence de courant $i^d_{e\_ref}$ pour la boucle de commande à dynamique rapide, en faisant la sommation $\Sigma\psi_i$ des consommations de puissance active dans les N cellules avec

$$i^d_{e\_ref} = \frac{\sum_{i=1}^{N}\Psi_i - V_e^q\, i^q_{e\_ref}}{V_e^d},$$

et en utilisant une boucle à verrouillage de phase sur la tension de contrôle $V_e$.

Avantageusement, le système de l'invention comprend une boucle à verrouillage de phase sur la composante de tension globale de sortie de la partie AC. Avantageusement, il comprend, en outre, un module de correction d'erreur de la boucle à verrouillage de phase tel que la composante de tension globale de sortie de la partie AC est donnée par la formule :

$$V_e = V_{ePLL} + K_{PLL}\sum_{i=1}^{N}\left(\int_0^1 E_{zi}\,dt\right)$$

avec :

- $K_{PLL}\sum_{i=1}^{N}\left(\int_0^1 E_{zi}\,dt\right)$ : terme de correction,
- $K_{PLL}$ : gain d'ajustage
- $E_{Zi}$ : erreur de suivi du carré de la tension DC.

Avantageusement, il comprend un module pour délivrer aux cellules des composantes module et phase par rapport à un référentiel (d, q). Avantageusement, il comprend un convertisseur de type « chain link STATCOM » sur chaque phase d'un réseau triphasé.

L'invention concerne également un procédé de contrôle d'au moins un convertisseur de tension à plusieurs cellules en série, dans lequel on délivre à chaque cellule les composantes module et phase d'une tension d'entrée $V_{ei}$ par rapport à un référentiel (d, q), comportant une partie AC et une partie DC, caractérisé en ce que l'on détermine directement la tension d'entrée AC (Vei) de chaque cellule en utilisant une boucle de contrôle de courant à dynamique rapide concernant la partie AC qui délivre une tension de contrôle $V_e$, et une boucle de contrôle de tension à dynamique plus lente relative aux cellules qui délivre une puissance active $\psi_i$ ; telle que :

$$\Psi_i = \frac{C_i}{2}\left(\frac{2}{R_{pi}C_i}Z_i + \frac{d}{dt}Z_{i\_ref} - K_{1Zi}E_{Zi} - K_{2Zi}\,sign(E_{Zi})\right)$$

où :

- $K_{1zi}$ et $K_{2zi}$ sont des gains d'ajustage positifs,
- $C_i$ : capacité continue du condensateur Ci de chaque cellule,
- $R_{pi}$ : pertes associées à chaque cellule,
- $Z_{i\text{-ref}}$ : valeur référencée de $Z_i=(U_{DCi})^2$, $U_{DCi}$ étant la tension continue aux bornes du condensateur Ci,
- $E_{zi}$ : telle que $E_{zi}=Z_i-Z_{i\text{-ref}}$,

en ce qu'on obtient la liaison entre les deux boucles de contrôle via la consommation de puissance active dans les cellules qui représente la sortie de la boucle de contrôle à dynamique plus lente,

et en ce qu'on obtient une référence de courant $i^d_{e\_ref}$ pour la boucle de commande à dynamique rapide, en faisant la

sommation $\sum \psi_i$ des consommations de puissance active dans les N cellules, avec $i^d_{e\_ref} = \dfrac{\sum\limits_{i=1}^{N} \Psi_i - V^q_e\, i^q_{e\_ref}}{V^d_e}$ et ,

en utilisant une boucle à verrouillage de phase sur la tension de contrôle $V_e$.

Avantageusement, on met en oeuvre une boucle à verrouillage de phase sur la composante de tension globale de sortie de la partie AC.

Avantageusement, on utilise, en outre, une correction d'erreur de la boucle à verrouillage de phase tel que la composante de tension globale de sortie de la partie AC (Ve) est donnée par la formule :

$$V_e = V_{ePLL} + K_{PLL} \sum_{i=1}^{N} \left( \int_0^1 E_{Zi} dt \right)$$

avec :

- $K_{PLL} \sum\limits_{i=1}^{N} \left( \int_0^1 E_{Zi} dt \right)$ : terme de correction,
- $K_{PLL}$ : gain d'ajustage
- $E_{Zi}$ : erreur de suivi du carré de la tension DC.

Avantageusement, on délivre aux cellules des composantes module et phase par rapport à un référentiel (d, q). Avantageusement, on utilise un convertisseur « chain link STATCOM » sur chaque phase d'un réseau triphasé.

L'invention proposée repose sur les caractéristiques suivantes :

- l'introduction d'un modèle dynamique du convertisseur étendu à un nombre N de cellules mises en série ;
- l'application de techniques de commande, sur la base du modèle dynamique développé, non linéaire, robuste, généralisée à N cellules.
- une amélioration de la boucle à verrouillage de phase proposée pour améliorer la décomposition dans un repère (d,q) des vecteurs tensions et courants mesurés nécessaires à la loi de commande.

Le système et le procédé de l'invention présentent donc les avantages suivants :

- une modélisation du convertisseur généralisé à N cellules mises en série,
- une formulation d'une commande générale valable quelque soit le nombre de cellules mises en série,
- une validité de la commande quelque soit le type d'électronique de puissance utilisant une modulation à largeur d'impulsion,
- une robustesse de la commande face aux variations paramétriques d'un convertisseur « chain link STATCOM »,
- une bonne réponse dynamique.

## BRÈVE DESCRIPTION DES DESSINS

La figure 1 illustre une configuration d'un « chain link STATCOM » monophasé de l'art connu mettant en oeuvre le procédé de l'invention.

La figure 2 illustre le schéma d'une des cellules DC connectées en série de cette configuration de l'art connu.

La figure 3 illustre une configuration « chain link STATCOM » simplifiée, monophasée mettant en oeuvre le procédé de l'invention.

La figure 4 illustre le système de contrôle de tension et de courant selon l'invention.

La figure 5 illustre la génération de tension distribuée avec des mêmes modules de vecteur (nombre infini de solutions) selon l'art connu.

La figure 6 illustre un exemple de réalisation du système de l'invention.

La figure 7 illustre une configuration triphasée mettant en oeuvre le procédé de l'invention.

Les figures 8A à 18C illustrent différents résultats mettant en évidence les performances de l'exemple de réalisation illustré sur la figure 6.

## EXPOSÉ DÉTAILLÉ DE MODES DE RÉALISATION PARTICULIERS

Un convertisseur STATCOM à plusieurs cellules en série, tel que décrit dans le document référencé [2], comprend, pour chaque phase, N cellules 12 connectées en série. La tension continue de chacune de ces cellules est surveillée en contrôlant la composante active du courant. De plus la composante réactive au courant est contrôlée afin d'ajuster le contrôle de tension $V_{res}$ de ligne du réseau de transport.

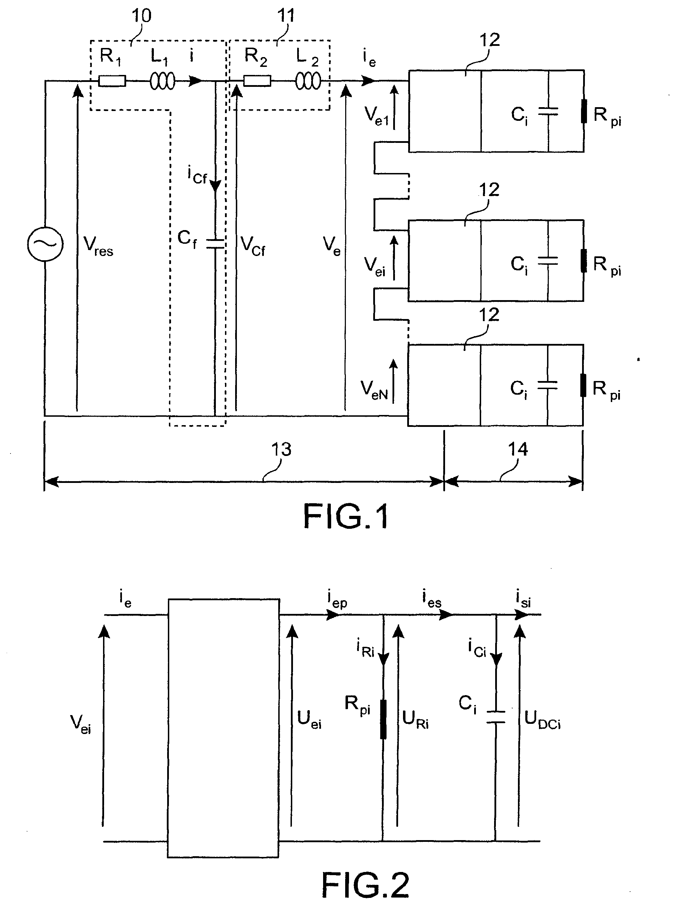

Le schéma d'un tel système « chain link STATCOM » monophasé, avec une partie AC 13 (courant alternatif) et une partie DC 14 (courant continu), est illustré sur la figure 1. Il comprend un filtre haute fréquence 10 comportant une résistance R1, une inductance L1 et un condensateur Cf, et un transformateur 11 dont l'impédance est donnée par la résistance R2 et l'inductance L2. La capacité du condensateur de chaque cellule 12 est donnée par Ci (i = 1,...N), tandis que les pertes associées à chaque cellule sont représentées par l'impédance Rpi (i = 1,...N).

En considérant la partie AC 13 du système associée au filtre HF 10 et au transformateur 11, on obtient la relation donnant la tension réseau :

$$V_{res} = R_1 i + L_1 \frac{d}{dt} i + V_{cf} \qquad (1)$$

et

$$i_e = i - i_{cf} \qquad (2)$$

La tension aux bornes du condensateur Cf est donnée par l'équation :

$$\frac{d}{dt} V_{cf} = \frac{1}{C_f} i_{cf} \qquad (3)$$

en remplaçant l'équation (2) dans (3) on obtient :

$$\frac{d}{dt} V_{cf} = \frac{1}{C_f} i - \frac{1}{C_f} i_e \qquad (4)$$

On peut également obtenir la relation suivante :

$$V_{cf} = R_2 i_e + L_2 \frac{d}{dt} i_e + V_e \qquad (5)$$

En combinant les équations (1), (4) et (5), le comportement du schéma électrique de la partie AC 13 de la figure 1 est donné par le système d'équations différentielles suivantes :

$$\begin{cases} \dfrac{d}{dt}i = -\dfrac{R_1}{L_1}i - \dfrac{1}{L_1}V_{cf} + \dfrac{1}{L_1}V_{res} \\[2ex] \dfrac{d}{dt}V_{cf} = \dfrac{1}{C_f}i - \dfrac{1}{C_f}i_e \\[2ex] \dfrac{d}{dt}i_e = -\dfrac{R_2}{L_2}i_e + \dfrac{1}{L_2}V_{cf} - \dfrac{1}{L_2}V_e \end{cases} \qquad (6)$$

Si l'on considère le circuit électrique illustré sur la figure 2, on obtient :

$$\begin{cases} \dfrac{d}{dt}U_{DC_i} = \dfrac{1}{C_i}i_{C_i} \\[2ex] i_{C_i} = i_{es} - i_{si} = i_{ep} - i_{R_i} - i_{si} \\[2ex] i_{R_i} = \dfrac{U_{R_i}}{R_{p_i}} = \dfrac{U_{ei}}{R_{p_i}} \end{cases} \qquad (7)$$

On obtient, alors, l'expression suivante de la tension continue aux bornes du condensateur Ci d'une cellule 12, illustrée sur la figure 2 :

$$\frac{d}{dt}U_{DC_i} = \frac{1}{C_i}i_{ep} - \frac{1}{C_i}i_{si} - \frac{1}{R_{p_i}C_i}U_{ei} \qquad (8)$$

Puisqu'il n'y a aucune charge connectée dans la partie DC du système :

$$i_{si} = 0 \qquad (9)$$

L'équation (8) devient :

$$\frac{d}{dt}U_{DC_i} = \frac{1}{C_i}i_{ep} - \frac{1}{R_{p_i}C_i}U_{ei} \qquad (10)$$

De plus, on a :

$$U_{DC_i} = U_{R_i} = U_{ei} \qquad (11)$$

L'équation peut être réécrite sous la forme :

$$\frac{d}{dt}U_{DC_i} = \frac{1}{C_i}i_{ep} - \frac{1}{R_{p_i}C_i}U_{DC_i} \qquad (12)$$

La relation entre les entrées/sorties de tensions et courants alternatifs/continus est donnée par l'équation suivante :

$$\begin{bmatrix} i_e \\ V_{ei} \end{bmatrix} = \begin{bmatrix} \dfrac{1}{W_{Ri}(t)} & 0 \\ 0 & W_{Ri}(t) \end{bmatrix} \begin{bmatrix} i_{ep} \\ U_{ei} \end{bmatrix} \qquad (13)$$

On obtient un modèle mathématique décrivant le comportement du schéma électrique de la figure 2, en combinant les équations (12) et (13).

$$\begin{cases} \dfrac{d}{dt} U_{DC_i} = -\dfrac{1}{R_{p_i} C_i} U_{DC_i} + \dfrac{1}{C_i} W_{Ri}(t) i_e \\ V_{ei} = W_{Ri}(t) U_{DC_i} \end{cases} \qquad (14)$$

Le modèle du système est donné alors en associant les équations (6) et (14) avec la tension de filtre de sortie suivante :

$$V_e = V_{e1} + V_{e2} + \ldots + V_{eN} = \sum_{i=1}^{N} V_{ei} \qquad (16)$$

On obtient :

$$\begin{cases} \dfrac{d}{dt} i = -\dfrac{R_1}{L_1} i - \dfrac{1}{L_1} V_{cf} + \dfrac{1}{L_1} V_{res} \\ \dfrac{d}{dt} V_{cf} = \dfrac{1}{C_f} i - \dfrac{1}{C_f} i_e \\ \dfrac{d}{dt} i_e = -\dfrac{R_2}{L_2} i_e + \dfrac{1}{L_2} V_{cf} - \dfrac{1}{L_2} V_e \\ V_e = V_{e1} + V_{e2} + V_{e3} + V_{e4} = \sum_{i=1}^{4} V_{ei} \\ V_{ei} = W_{Ri}(t) U_{DC_i}, i = 1, \ldots, N \\ \dfrac{d}{dt} U_{DC_i} = -\dfrac{1}{R_{p_i} C_i} U_{DC_i} + \dfrac{1}{C_i} W_{Ri}(t) i_e \end{cases} \qquad (17)$$

Le modèle ci-dessus n'est pas très utile si on désire contrôler le transfert de puissance active entre la partie AC et la partie DC. On propose donc de contrôler la valeur carré des tensions $(U_{DCi})^2$. On a la définition suivante :

$$Z_i = \left( U_{DC_i} \right)^2 \qquad (18)$$

Sa dérivée temporelle est :

$$\frac{d}{dt}Z_i = -\frac{2}{R_{p_i}C_i}Z_i + \frac{2}{C_i}U_{DC_i}W_{Ri}(t)i_e \qquad (19)$$

En utilisant la seconde équation de (14) on obtient :

$$\frac{d}{dt}Z_i = -\frac{2}{R_{p_i}C_i}Z_i + \frac{2}{C_i}V_{ei}i_e \qquad (20)$$

Le transfert de puissance active dans le système est représenté par :

$$\begin{cases} P = \sum_{i=1}^{N}P_i \\ P_i = V_{ei}i_e \end{cases} \qquad (21)$$

Le système d'équations (17) peut être réécrit :

$$\begin{cases} \frac{d}{dt}i = -\frac{R_1}{L_1}i - \frac{1}{L_1}V_{cf} + \frac{1}{L_1}V_{res} & (e) \\ \frac{d}{dt}V_{cf} = \frac{1}{C_f}i - \frac{1}{C_f}i_e & (f) \\ \frac{d}{dt}i_e = -\frac{R_2}{L_2}i_e + \frac{1}{L_2}V_{cf} - \frac{1}{L_2}V_e & (a) \\ V_e^d = \sum_{i=1}^{N}V_{ei}^d & (b) \\ V_e^q = \sum_{i=1}^{N}V_{ei}^q & (c) \\ \frac{d}{dt}Z_i = -\frac{2}{R_{p_i}C_i}Z_i + \frac{2}{C_i}\left(V_{ei}^d i_e^d + V_{ei}^q i_e^q\right) \rightarrow i = 1,...,N & (d) \end{cases} \qquad (22)$$

Les équations (22e), (22f) et (22a) représentent la partie AC du système de l'invention, tandis que les équations (22b) et (22c) représentent la liaison de distribution de tension entre la tension globale $V_e$ de sortie de la partie AC et l'entrée AC sur chaque cellule 12. Le comportement de chaque cellule 12 est finalement donné par l'équation (22d), dans laquelle le terme $\left(V_{ei}^d i_e^d + V_{ei}^q i_e^q\right)$ est la puissance active échangée.

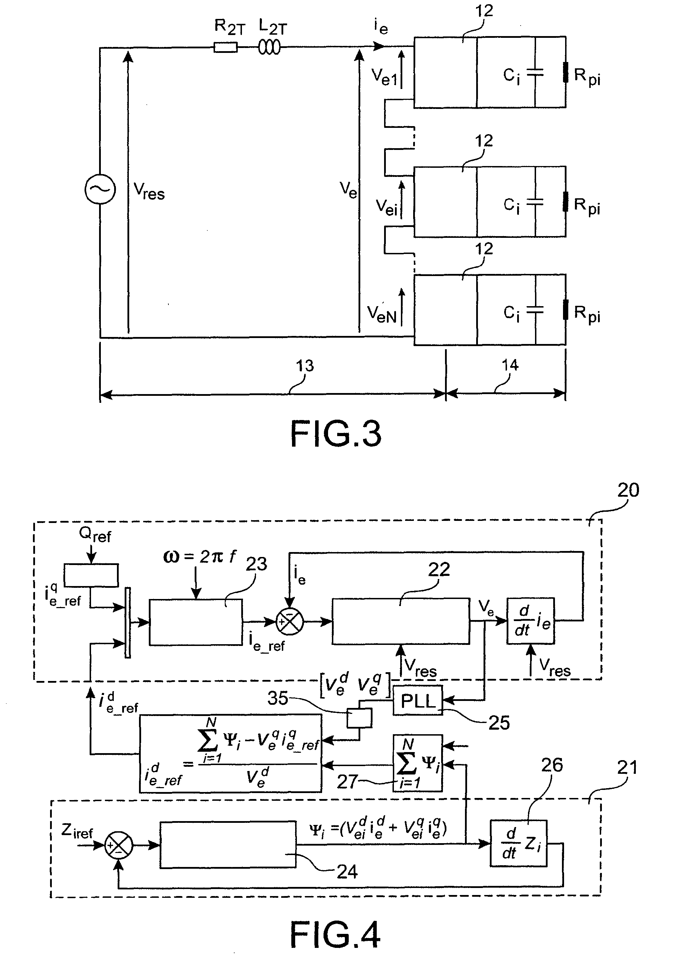

Si l'on néglige le filtre haute fréquence dans le domaine des fréquences de travail, le schéma électrique à contrôler illustré sur la figure 1 peut être simplifié comme illustré sur la figure 3.

Le modèle d'état associé est donné par les équations suivantes :

$$\begin{cases} \dfrac{d}{dt} i_e = -\dfrac{R_{2T}}{L_{2T}} i_e + \dfrac{1}{L_{2T}} V_{cf} - \dfrac{1}{L_{2T}} V_e & (a) \\[2mm] V_e^d = \displaystyle\sum_{i=1}^{N} V_{ei}^d & (b) \\[2mm] V_e^q = \displaystyle\sum_{i=1}^{N} V_{ei}^q & (c) \\[2mm] \dfrac{d}{dt} Z_i = -\dfrac{2}{R_{p_i} C_i} Z_i + \dfrac{2}{C_i}\left( V_{ei}^d\, i_e^d + V_{ei}^q\, i_e^q \right) \;\rightarrow\; i = 1,...,N & (d) \end{cases} \qquad (23)$$

Le système d'équation (23) est utilisé pour toute la synthèse de contrôle. Dans le schéma de contrôle, on suppose que ce système représente une connexion basée sur le temps de deux boucles de contrôle. La première boucle de contrôle (20) avec une dynamique rapide donnée par l'équation (23a) concerne la partie AC. La seconde boucle de contrôle (21) avec une dynamique plus lente représentant les cellules est donnée par l'équation (23d). La liaison entre ces deux boucles 20 et 21 est la tension distribuée dans le cadre de référence (d,q), comme illustré dans les équations (23b) et (23c).

Dans la boucle de contrôle 20 à dynamique rapide, est représenté un ensemble de contrôle de courant à dynamique rapide 22 et l'obtention d'un signal sinusoïdal 23. Dans la boucle de contrôle 21 à dynamique plus lente relative aux cellules est représenté un ensemble de contrôle de tension à dynamique plus lente 24 qui délivre la puissance active $\psi_i$.

La liaison entre ces deux boucles de contrôle 20 et 21 est obtenue via la consommation de puissance active dans les cellules représentant la sortie de la boucle de contrôle de dynamique plus lente 21.

On dérive la référence de courant $i_{e\_ref}^d$ pour la boucle de commande à dynamique rapide 20 en faisant la sommation $\sum \psi_i$ (27) des consommations de puissance active dans les N cellules. Ceci est possible grâce à l'emploi de deux ensembles de contrôle de tension à dynamique lente et à dynamique rapide, la référence de courant $i_{e\_ref}^d$ délivrée par la boucle plus lente étant vue comme une variable à variation lente (i.e. variable constante) à partir de la boucle plus rapide. L'algorithme de contrôle interconnecté est obtenu, sur la figure 4 en utilisant une boucle à verrouillage de phase 25 (PLL ou « Phase locked loop ») sur la tension de contrôle $V_e$.

Si on considère l'équation (23d), l'ensemble de contrôle de tension à dynamique plus lente 24 est dérivé (module 26) en utilisant une technique selon la théorie de Lyapunov. Si l'on considère la quantité suivante :

$$\Psi_i = V_{ei}^d\, i_e^d + V_{ei}^q\, i_e^q \qquad (24)$$

L'équation (23d) peut être réécrite :

$$\frac{d}{dt} Z_i = -\frac{2}{R_{p_i} C_i} Z_i + \frac{2}{C_i} \Psi_i \qquad (25)$$

Si l'on considère la fonction de Lyapunov suivante :

$$V_{Lyap} = \frac{1}{2} E_{Zi}^2 \qquad (26)$$

où $E_{zi} = Z_i - Z_{i\_ref}$ est l'erreur de suivi du carré de la tension DC. Le dérivée de la fonction de Lyapunov est donnée par :

$$\frac{d}{dt}V_{Lyap} = E_{Zi}\left(-\frac{2}{R_{pi}C_i}Z_i + \frac{2}{C_i}\Psi_i - \frac{d}{dt}Z_{i\_ref}\right) \tag{27}$$

L'équation ci-dessus est définie négative en choisissant la loi suivante de contrôle de tension de l'invention :

$$\Psi_i = \frac{C_i}{2}\left(\frac{2}{R_{pi}C_i}Z_i + \frac{d}{dt}Z_{i\_ref} - K_{1Zi}E_{Zi} - K_{2Zi}\,sign(E_{Zi})\right) \tag{28}$$

où $K_{izi}$ et $K_{2zi}$ sont des gains d'ajustage positifs.
De la même manière, on considère l'équation (23a) avec l'équation Lyapunov associée donné par

$$V_{ie} = \frac{1}{2}E_{ie}^2 \tag{29}$$

où $E_{ie} = i_e - i_{e\_ref}$. De manière similaire, la loi de contrôle qui fait converger l'erreur de suivie $E_{ie}$ vers zéro est donnée par :

$$V_e = L_{2T}\left(k_{1\_ie}E_{ie} - k_{2\_ie}\,sign(E_{i_e}) - \frac{R_{2T}}{L_{2T}}i_e + \frac{1}{L_{2T}}V_{res} - \frac{d}{dt}i_{e\_ref}\right) \tag{30}$$

$k_{1\_ie}$ et $k_{2\_ie}$ étant des gains d'ajustage positifs.
A partir des équations (24), (23b) et (23c), on obtient :

$$\sum_{i=1}^{4}\Psi_i = V_e^d\,i_e^d + V_e^q\,i_e^q \tag{31}$$

Par conséquent la composante d du courant est calculée par :

$$i_e^d = \frac{\sum_{i=1}^{4}\Psi_i - V_e^q\,i_e^q}{V_e^d} \tag{32}$$

Ainsi, on a ci-dessous la composante d référence du courant $i_{e\_ref}^d$ pour la boucle de contrôle rapide :

$$i_{e\_ref}^d = \frac{\sum_{i=1}^{4}\Psi_i - V_e^q\,i_e^q}{V_e^d} \tag{33}$$

Etant donné que la référence de courant $i_{e\_ref}^q$ est donnée par une boucle externe, on peut calculer la référence de courant AC $i_{e\_ref}$ :

$$i_{e\_ref} = i^d_{e\_ref} \cos(\omega t) - i^q_{e\_ref} \sin(\omega t) \qquad \cdot \qquad (34)$$

où $\omega = 2\pi f$, f étant la fréquence du réseau.

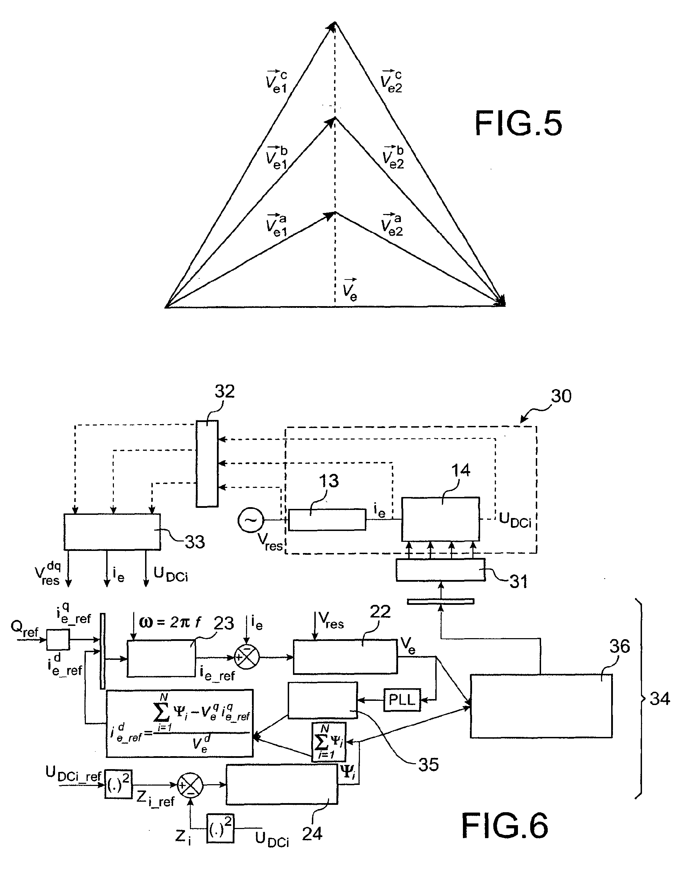

Si l'on suppose que l'on a seulement deux cellules 12 dans le système, il existe un nombre infini de solutions pour générer $\vec{V}_{e1}$ et $\vec{V}_{e2}$ si l'on considère le même module pour tous les vecteurs. Sur la figure 5 sont ainsi présentées trois solutions. Il en serait de même pour N cellules.

Pour améliorer le système de l'invention, on délivre aux cellules les composantes module et phase par rapport à un référentiel (d,q) de chaque tension $\vec{V}_{ei}$. A première vue en considérant la tension totale $\vec{V}_e = \begin{bmatrix} V^d_e & V^q_e \end{bmatrix}^T$, les tensions distribuées $\vec{V}_{ei} = \begin{bmatrix} V^d_{ei} & V^q_{ei} \end{bmatrix}^T$ ne peuvent être calculées en fixant le même module pour chaque vecteur et en déduisant leurs phases correspondantes. On doit alors fixer une contrainte supplémentaire sur les tensions distribuées. Deux méthodes sont possibles.

1. Méthode 1

On utilise la même composante d pour toutes les tensions distribuées.

$$V^d_{ei} = V^d_{e1} = V^d_{e2} = \ldots = V^d_{eN} = \frac{V^d_e}{N} \qquad (35)$$

De l'équation (25), on obtient :

$$V^q_{ei} = \frac{\Psi_i - V^d_{ei}\, i^d_e}{i^q_e} \qquad (36)$$

En remplaçant les équations (33) et (35) dans (36), on obtient les composantes q de tension distribuée :

$$V^q_{ei} = \frac{1}{i^q_e}\Psi_i - \frac{\sum\limits_{i=1}^{N}\Psi_i - V^d_e\, i^d_e}{N\, i^q_e} \qquad (37)$$

Les tensions distribuées à fournir aux cellules sont exprimées :

$$V_{ei} = \begin{bmatrix} V^d_{ei} \\ V^q_{ei} \end{bmatrix} = \begin{bmatrix} \dfrac{V^d_e}{N} \\ \dfrac{1}{i^q_e}\Psi_i - \dfrac{\sum\limits_{i=1}^{N}\Psi_i - V^d_e\, i^d_e}{N\, i^q_e} \end{bmatrix} \qquad (38)$$

Il faut remarquer que la relation ci-dessus n'est pas applicable pour $i_c^q = 0$.

2. <u>Méthode 2</u>

On utilise la même composante q pour toutes les tensions.

$$V_{ei}^q = V_{e1}^q = V_{e2}^q = \dots = V_{eN}^q = \frac{V_e^q}{N} \qquad (39)$$

De l'équation (25), on obtient :

$$V_{ei}^d = \frac{\Psi_i - V_{ei}^q\, i_e^q}{i_e^d} \qquad (40)$$

En remplaçant les équations (33) et (39) dans (40), on obtient :

$$V_{ei}^d = \frac{V_e^d}{\sum_{i=1}^{N} \Psi_i - V_e^q\, i_e^q}\left(\Psi_i - \frac{V_e^q\, i_e^q}{N}\right) \qquad (41)$$

Les tensions distribuées à fournir aux cellules sont exprimées :

$$V_{ei} = \begin{bmatrix} V_{ei}^d \\ V_{ei}^q \end{bmatrix} = \begin{bmatrix} \dfrac{V_e^d}{\sum_{i=1}^{N} \Psi_i - V_e^q\, i_e^q}\left(\Psi_i - \dfrac{V_e^q\, i_e^q}{N}\right) \\ \dfrac{V_e^q}{N} \end{bmatrix} \qquad (42)$$

On peut apporter une amélioration complémentaire.

Si l'on considère l'équation (23a) et si l'on suppose que les composantes (d,q) des tensions distribuées $V_{ei}$ ne sont pas connues exactement, et estimées par $\hat{V}_{ei}^d$ est $\hat{V}_{ei}^q$ comme :

$$\begin{cases} \hat{V}_{ei}^d = V_{ei}^d + \Delta V_{ei}^d \\ \hat{V}_{ei}^q = V_{ei}^q + \Delta V_{ei}^q \end{cases} \qquad (43)$$

où $\Delta V_{ei}^d$ et $\Delta V_{ei}^q$ sont les erreurs d'estimation sur chaque composante. En remplaçant les équations (24) et (43) dans (25), on obtient :

$$\frac{d}{dt}Z_i = -\frac{2}{R_{p_i}C_i}Z_i + \frac{2}{C_i}\Psi_i + \frac{2}{C_i}\left(\Delta V_{ei}^d i_e^d + \Delta V_{ei}^q i_e^q\right) \qquad (44)$$

Comme les composantes q de tension sont très proches de zéro en comparaison avec les composantes d de tension, les erreurs d'estimation peuvent être considérées autour de zéro $\Delta V_{ei}^q \cong 0$. L'équation (44) peut être réécrite :

$$\frac{d}{dt}Z_i = -\frac{2}{R_{p_i}C_i}Z_i + \frac{2}{C_i}\Psi_i + \frac{2}{C_i}\Delta V_{ei}^d i_e^d \qquad (45)$$

Selon la même procédure que pour la synthèse de contrôle de tension à dynamique lente et en utilisant la même fonction Lyapunov, on obtient la dérivée :

$$\frac{d}{dt}V_{Lyap} = E_{Zi}\left(-\frac{2}{R_{pi}C_i}Z_i + \frac{2}{C_i}\Psi_i - \frac{d}{dt}Z_{i\_ref} + \frac{2}{C_i}\Delta V_{ei}^d i_e^d\right) \quad (46)$$

L'équation ci-dessus est définie négative en choisissant la loi de contrôle de tension suivante et l'erreur d'estimation de contrôle adaptatif de puissance :

$$\Psi_i = \frac{C_i}{2}\left(\frac{2}{R_{pi}C_i}Z_i + \frac{d}{dt}Z_{i\_ref} - K_{1Zi}E_{Zi} - K_{2Zi}\,sign(E_{Zi})\right) \quad (47)$$

$$\Delta V_{ei}^d = k_{PLLi}\frac{2}{C_i i_e^d}\int_0^t E_{Zi}\,dt \qquad (48)$$

où $K_{1zi}$, $K_{2zi}$ et $K_{PLLi}$ sont des gains d'ajustage. L'expression (48) peut être configurée sans détérioration de l'analyse de stabilité globale comme suit :

$$\Delta V_{ei}^d = K_{PLLi}\int_0^t E_{Zi}\,dt \qquad (49)$$

où $K_{PLLi}$ sont des gains d'ajustage. La quantité ci-dessus peut être ajoutée directement aux composantes d de chaque tension distribuée correspondant à chaque cellule.

Au lieu de corriger chaque tension distribuée de composante d, on peut modifier directement la composante d de tension globale. Les composantes de tension obtenues sont alors utilisées pour calculer la référence de courant $i_{e\_ref}^d$ et les tensions distribuées.

La composante d de tension globale est recalculée en utilisant la sortie d de la boucle PLL $V_{ePLL}^d$ et le terme de correction $\Delta V_e^d$ :

$$V_e^d = \sum_{i=1}^{N}\left(V_{ei}^d + \Delta V_{ei}^d\right) = \sum_{i=1}^{N}V_{ei}^d + \sum_{i=1}^{N}\Delta V_{ei}^d = V_{ePLL}^d + \sum_{i=1}^{N}\left(K_{PLLi}\int_0^t E_{Zi}\,dt\right) \qquad (50)$$

Si l'on suppose que le même gain adaptatif est utilisé pour chaque cellule, on obtient :

$$V_e^d = V_{ePLL}^d + K_{PLL}\sum_{i=1}^{N}\left(\int_0^t E_{Zi}\,dt\right) \qquad (51)$$

Exemple de réalisation

Dans un exemple de réalisation avec un système à quatre cellules 12, le système de contrôle de l'invention est illustré sur la figure 6. Les tensions distribuées des cellules 12 à pont en H sont générées en utilisant la méthode 1 définie ci-dessus, parce que la méthode 2 est très sensible aux harmoniques et doit être utilisée avec $i_e^q \cong 0$. Sur cette figure 6 on retrouve les dispositifs déjà illustrés sur la figure 4.

Le système de l'invention, référencé ici 30, est connecté en entrée à un générateur MLI 31, et est connecté en sortie à des capteurs de mesure 32 et à un dispositif de collecte de données 33. La loi de commande 34 comprend, ici, une correction d'erreur PLL 35, et un algorithme de génération de tensions distribuées $\left[v_{ei}^d \; v_{ei}^q\right]^T$ 36.

Cet exemple de réalisation permet de mettre en évidence les performances du système de contrôle de l'invention. Pour montrer les performances en robustesse de la loi de contrôle de l'invention, on utilise différentes valeurs des condensateurs du bus continu (DC) dans le système STATCOM ($C_1$=1,2 $C_N$, $C_2$=$C_N$, $C_3$=$C_N$ et $C_4$=0,8 $C_N$) alors que la loi de contrôle est déduite avec une même valeur nominale ($C_N$=18 mF) pour tous ces condensateurs. Trois types de résultats sont ainsi obtenus.

1. Loi de contrôle avec correction PLL (boucle à verrouillage de phase)

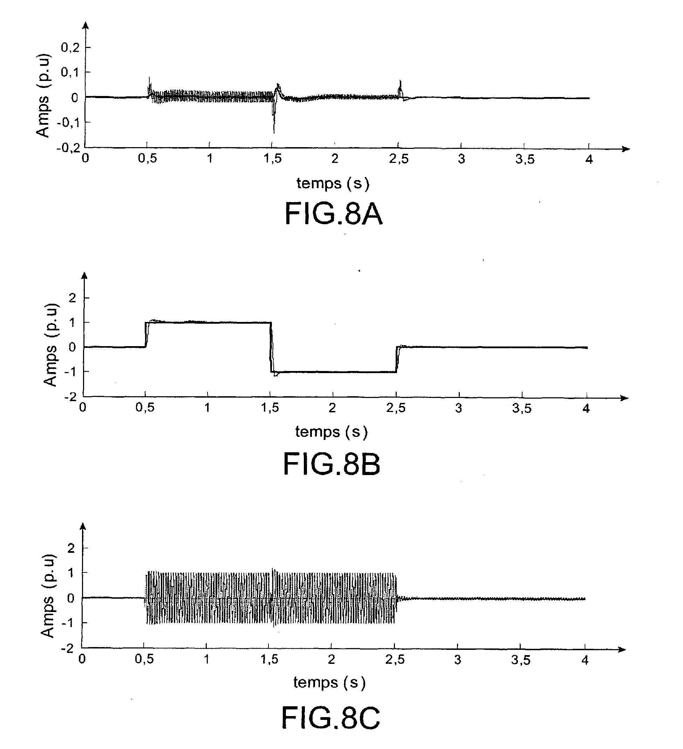

Les figures 8A, 8B et 8C, illustrent le contrôle en courant AC avec ses composantes d (figure 8A) et q (figure 8B) correspondantes :

- A 0,5 secondes, 1 p.u. de courant réactif est demandé,
- A 1,7 secondes, la référence de contrôle est commutée de 1 p.u. à -1 p.u. de courant réactif.
- A 2,5 secondes, la référence de contrôle est réglée à nouveau à 0 p.u. de courant réactif.

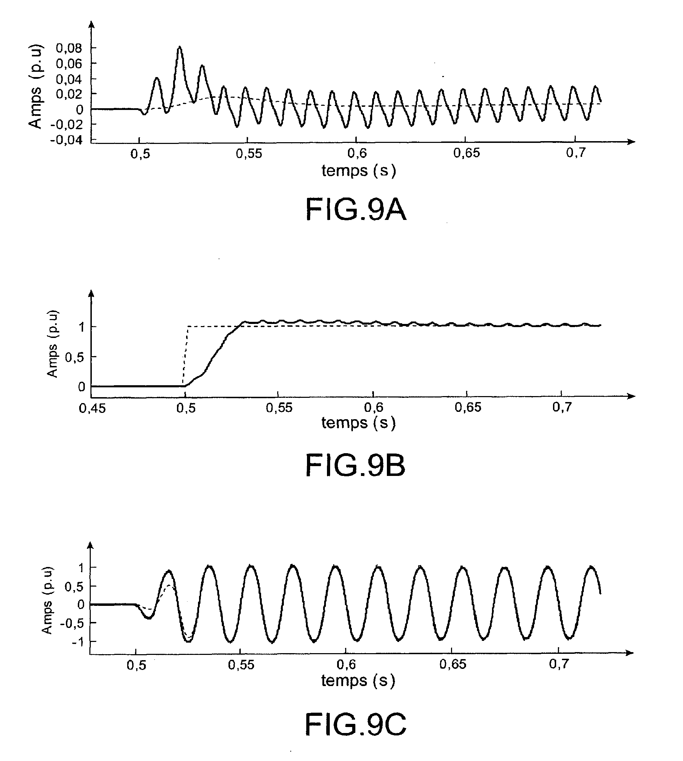

La figure 8C illustre les valeurs de courant calculées et mesurées. Les figures 9A, 9B et 9C illustrent un « zoom » des figures 8A, 8B et 8C au temps 0,5 secondes.

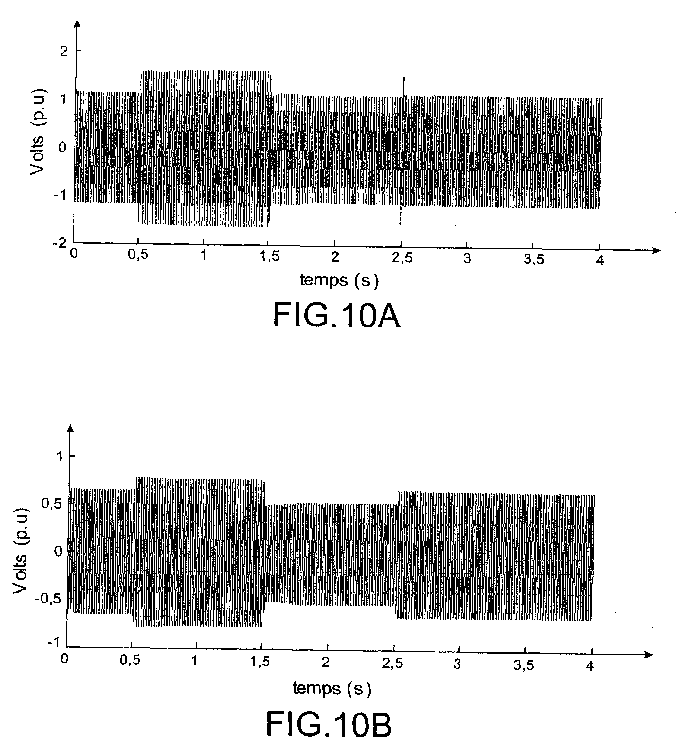

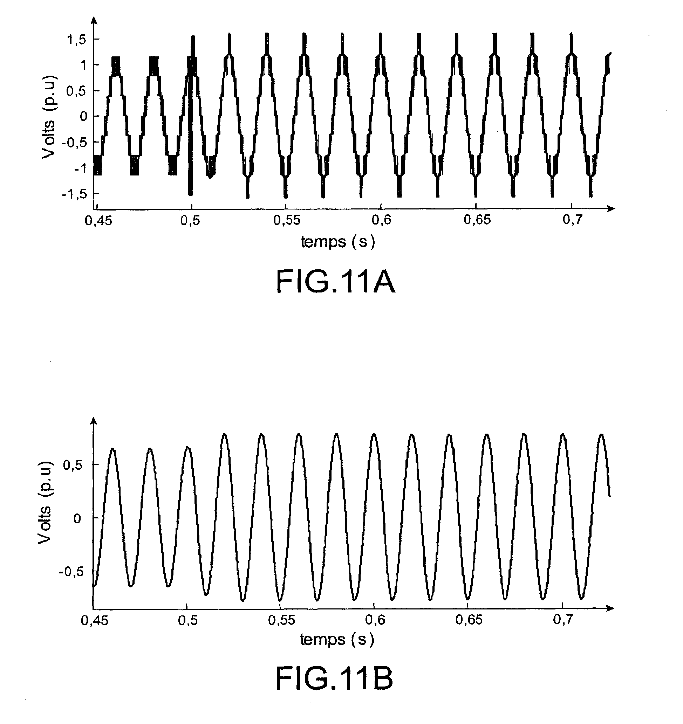

La tension AC correspondante et les entrées de contrôle de cellules DC sont respectivement représentées sur les figures 10A et 10B. Les figures 11A et 11B illustrent un « zoom » des figures 10A et 10B au temps 0,5 secondes.

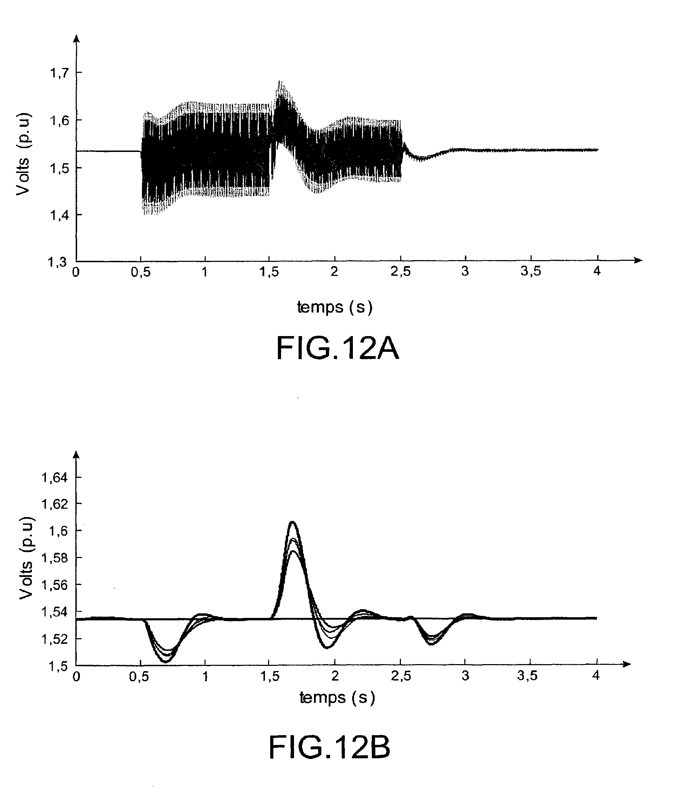

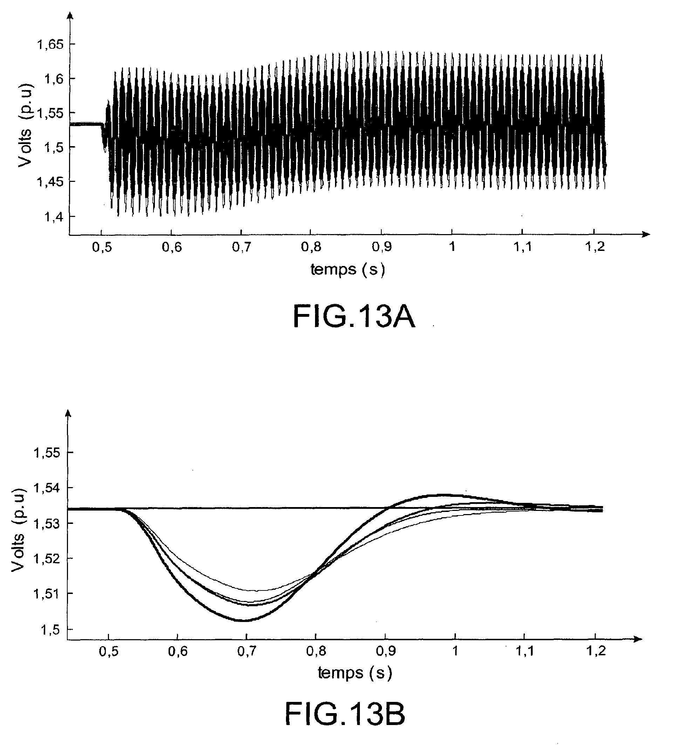

Les figures 12A et 12B illustrent respectivement les tensions DC et les tensions DC filtrées avec la tension référence. Les figures 13A et 13B illustrent un « zoom » des figures 12A et 12B au temps 0,5 secondes.

On peut remarquer que les résultats ainsi obtenus sont très bons en terme de dynamique et de robustesse de la loi de contrôle considérée.

2. Loi de contrôle sans correction PLL

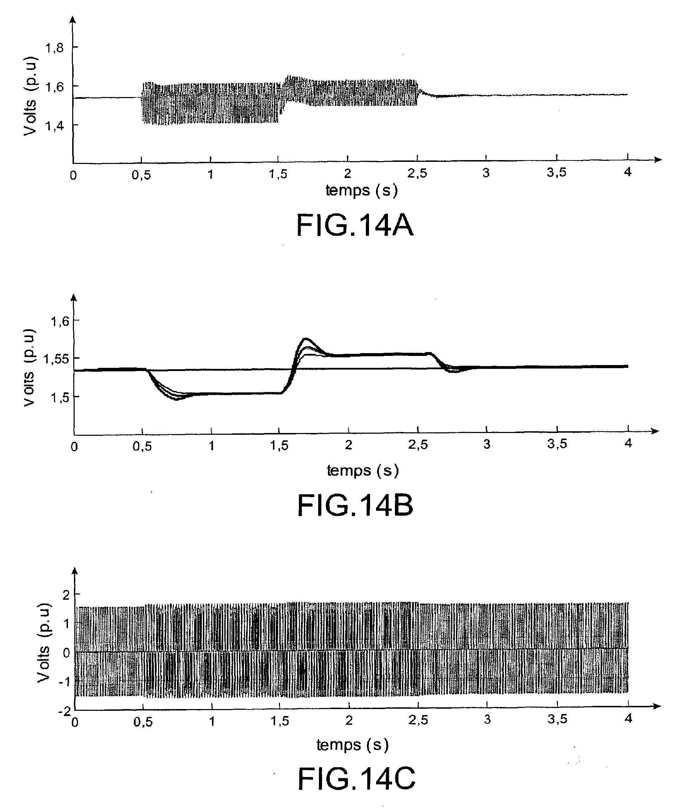

La réalisation de cette loi de contrôle présente des erreurs en régime permanent pour les tensions de bus DC. On montre que même si la boucle à verrouillage de phase (PLL) présente de faibles performances, la connexion des sorties de la boucle à verrouillage de phase proposée peut compenser des perturbations et des incertitudes de contrôle. Les figures 14A, 14B et 14C illustrent respectivement des tensions DC, des tensions DC filtrées et une tension de référence (sans correction PLL) et des tensions AC pont en H correspondantes.

3. <u>Comparaison avec une loi de contrôle de l'art connu</u>

Afin de mettre en évidence les performances de la loi de contrôle de l'invention, on compare celle-ci avec une loi de contrôle présentée dans le document référencé [1].

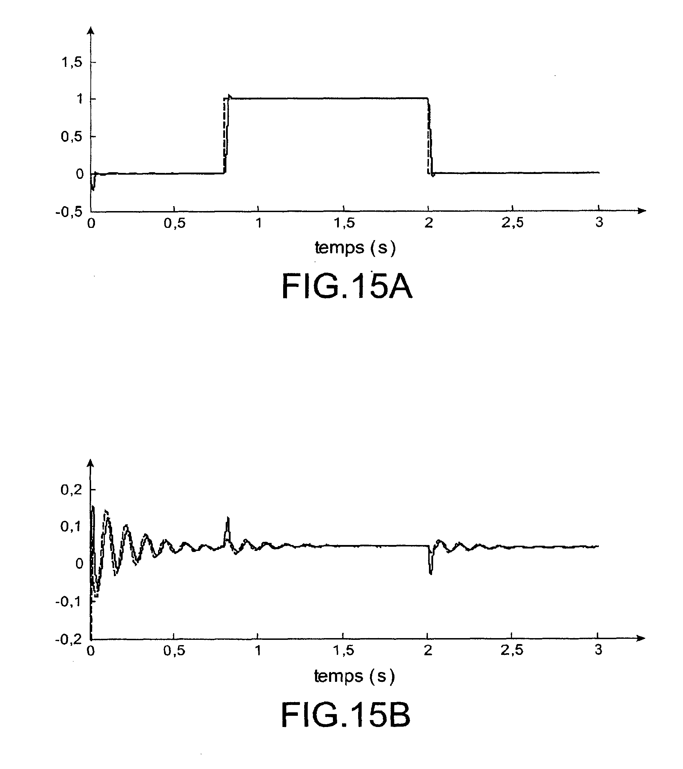

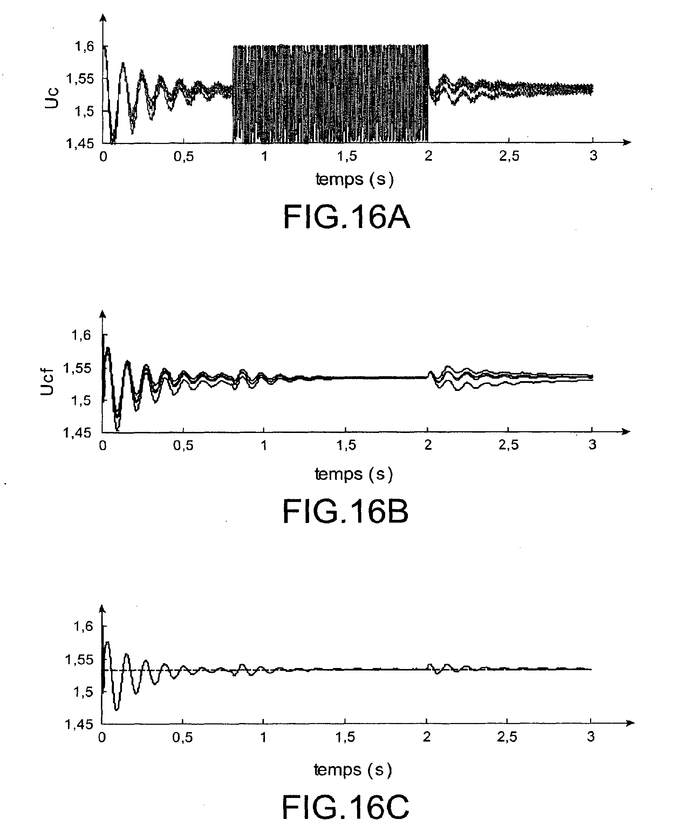

Dans ce document, le contrôle des cellules DC est élaboré autour d'une valeur moyenne et une correction de contrôle est ajoutée à chaque cellule si sa valeur est différente de la valeur référence. Ceci justifie les dispersions obtenues des tensions DC autour de la valeur moyenne illustrées sur les figures 16A, 16B et 16C, qui peuvent créer une instabilité de la loi de contrôle. Le contrôle en courant utilisant la technique mise en évidence dans ce document est illustrée sur les figures 15A (courant iq) et 15B (courant id).

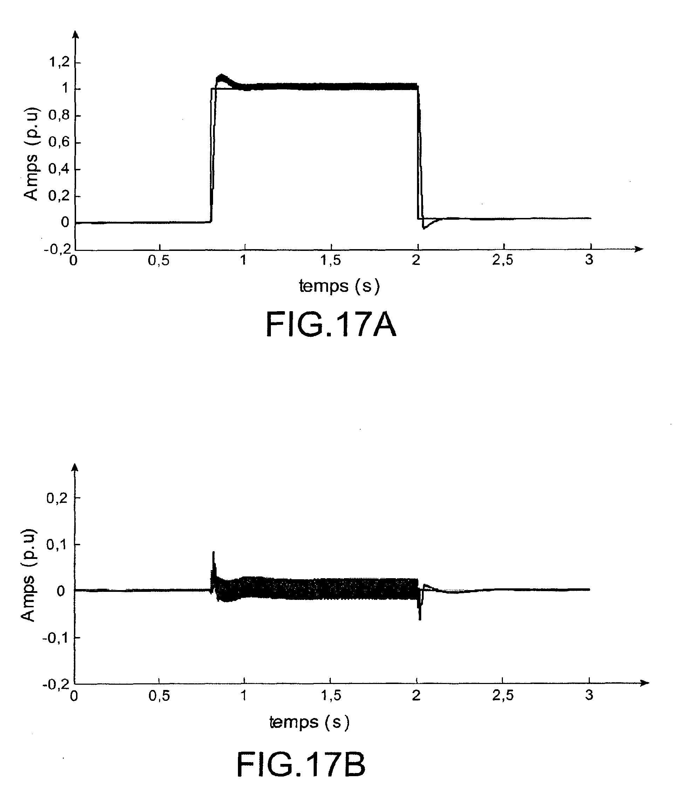

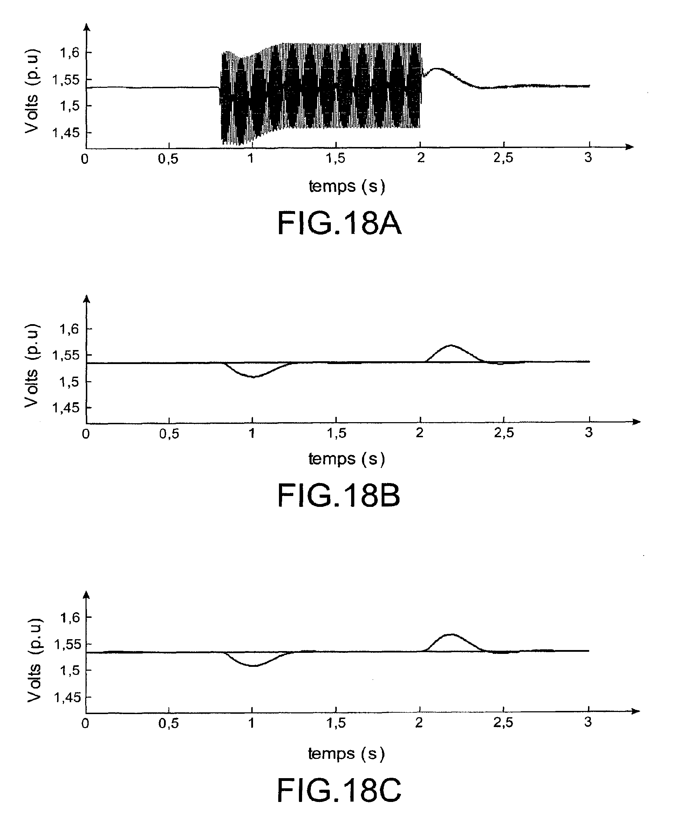

Par contre, comme illustré sur les figures 18A à 18C, les tensions DC sont bien contrôlées en utilisant la loi de contrôle de l'invention ; la figure 18A illustrant les tensions DC, la figure 18B illustrant les tensions DC filtrées et la tension référence, la figure 18C illustrant la tension DC moyenne et la tension référence. Le contrôle en courant correspondant est illustré sur les figures 17A (courant iq) et 17B (courant id).

<u>Exemple de réalisation triphasé</u>

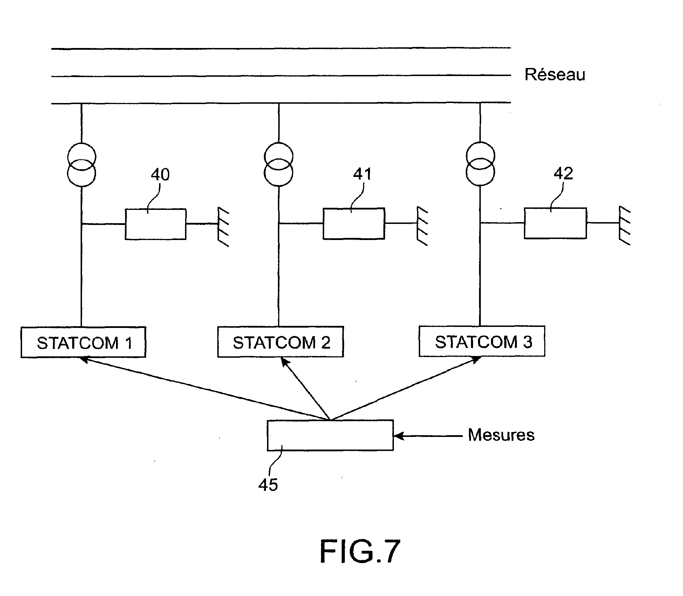

La figure 7 illustre une configuration « chain link STATCOM » triphasée mettant en oeuvre le procédé de l'invention, dans lequel sont représentés des STATCOM monophasés : STATCOM 1, STATCOM 2 et STATCOM 3, des filtres 40, 41 et 42, et un calculateur 45 recevant les mesure.

REFERENCES

[1] "Industrial D-STATCOM chain link Modelling and control" de A. Benchaib, E. Lee-Kwet-Sun, J-L. Thierry et G. de Preville (12th European Conférence on Power Electronics and applications, EPE 2007, Aalborg, Danemark, 2-5 Septembre 2007).

[2] "Analysis and Performance Investigation of a Cascaded Multilevel STATCOM for Power System Voltage Régulation" de Nitrus Voraphonpiput, Teratam Bunyagul et Somchai Chatratana (Energy for Sustainable Development, Mars 2006)

[3] " Novel Controller for the 48-Pulse VSC STATCOM and SSSC for Voltage Regulation and Reactive Power Compensation de M.S. El-Moumi et A. M. Sharaf (IEEE Transactions an Power Systems, Vol. 20, No. 4, Novembre 2005, p. 1985-1997)

**Revendications**

1.  Système de contrôle d'au moins un convertisseur de tension à plusieurs cellules (12) en série, dans lequel on délivre à chaque cellule les composantes module et phase d'une tension d'entrée Vei par rapport à un référentiel (d, q), comportant une partie AC (13) et une partie DC (14), **caractérisé en ce qu'**il comprend une boucle de contrôle de courant à dynamique rapide (20) concernant la partie AC (13) qui délivre une tension de contrôle Ve, et une boucle de contrôle de tension à dynamique plus lente (21) relative aux cellules (12) qui délivre une puissance active $\psi_i$ ; telle que :

$$\Psi_i = \frac{C_i}{2}\left( \frac{2}{R_{pi}C_i}Z_i + \frac{d}{dt}Z_{i\_ref} - K_{1Zi}\,E_{Zi} - K_{2Zi}\,sign\left(E_{Zi}\right) \right)$$

où :

• $K_{1zi}$ et $K_{2zi}$ sont des gains d'ajustage positifs,
• $C_i$ : capacité continue du condensateur Ci de chaque cellule,
• $R_{pi}$ : pertes associées à chaque cellule,
• $Z_{i\text{-ref}}$ : valeur référencée de Zi=$(U_{DCi})^2$, $U_{DCi}$ étant la tension continue aux bornes du condensateur Ci,

- $E_{zi}$ : telle que $E_{zi}=Z_i-Z_{i\text{-ref}}$,

**en ce que** la liaison entre ces deux boucles de contrôle (20, 21) est obtenue via la consommation de puissance active dans les cellules (12) qui représente la sortie de la boucle de contrôle à dynamique plus lente (21),

et **en ce qu'**il comprend des moyens d'obtention d'une référence de courant $i^d_{e\_ref}$ pour la boucle de commande à dynamique rapide (20), en faisant la sommation $\sum \psi_i$ des consommations de puissance active dans les N cellules avec $i^d_{e\_ref} = \dfrac{\sum\limits_{i=1}^{N} \Psi_i - V^q_e\, i^q_{e\_ref}}{V^d_e}$ et en utilisant une boucle à verrouillage de phase (25) sur la tension de contrôle $V_e$.

2. Système selon la revendication 1, comprenant une boucle à verrouillage de phase sur la composante de tension globale de sortie de la partie AC (Ve).

3. Système selon la revendication 1, comprenant un module de correction d'erreur de la boucle à verrouillage de phase (35) tel que la composante de tension globale de sortie de la partie AC (Ve) est donnée par la formule :

$$V_e = V_{ePLL} + K_{PLL} \sum_{i=1}^{N}\left( \int_0^1 E_{Zi}\, dt \right)$$

avec :

- $K_{PLL} \sum\limits_{i=1}^{N}\left( \int_0^1 E_{Zi}\, dt \right)$ **:** terme de correction,
- $K_{PLL}$ : gain d'ajustage
- $E_{Zi}$ : erreur de suivi du carré de la tension DC.

4. Système selon l'une quelconque des revendications précédentes, comprenant un module pour délivrer aux cellules des composantes module et phase par rapport à un référentiel (d, q).

5. Système selon la revendication 1, comprenant un convertisseur « chain link STATCOM » sur chaque phase d'un réseau triphasé.

6. Procédé de contrôle d'au moins un convertisseur de tension à plusieurs cellules (12) en série, dans lequel on délivre à chaque cellule les composantes module et phase d'une tension d'entrée $V_{ei}$ par rapport à un référentiel (d, q), comportant une partie AC (13) et une partie DC (14), **caractérisé en ce que** l'on détermine directement la tension d'entrée AC (Vei) de chaque cellule en utilisant une boucle de contrôle de courant à dynamique rapide (20) concernant la partie AC (13) qui délivre une tension de contrôle $V_e$, et une boucle de contrôle de tension à dynamique plus lente (21) relative aux cellules (12) qui délivre une puissance active $\psi_i$ ; telle que :

$$\Psi_i = \frac{C_i}{2}\left( \frac{2}{R_{pi} C_i} Z_i + \frac{d}{dt} Z_{i\_ref} - K_{1Zi} E_{Zi} - K_{2Zi}\, sign\!\left(E_{Zi}\right) \right)$$

où :

- $K_{1zi}$ et $K_{2zi}$ sont des gains d'ajustage positifs,
- $C_i$ : capacité continue du condensateur Ci de chaque cellule,
- $R_{pi}$ : pertes associées à chaque cellule,

• $Z_{i\text{-}ref}$ : valeur référencée de $Z_i = (U_{Dci})^2$, $U_{DCi}$ étant la tension continue aux bornes du condensateur Ci,

• $E_{zi}$ : telle que $E_{zi} = Z_i - Z_{i\text{-}ref}$,

**en ce qu'**on obtient la liaison entre les deux boucles de contrôle (20, 21) via la consommation de puissance active dans les cellules (12) qui représente la sortie de la boucle de contrôle à dynamique plus lente (21),

et **en ce qu'**on obtient une référence de courant $i^d_{e\_ref}$ pour la boucle de commande à dynamique rapide, en faisant la sommation $\sum \psi_i$ des consommations de puissance active dans les N cellules, avec

$$i^d_{e\_ref} = \frac{\sum_{i=1}^{N} \Psi_i - V^q_e \, i^q_{e\_ref}}{V^d_e} \quad ,$$

et en utilisant une boucle à verrouillage de phase (25) sur la tension de

contrôle $V_e$.

**7.** Procédé selon la revendication 6, dans lequel on met en oeuvre une boucle à verrouillage de phase sur la composante de tension globale de sortie de la partie AC (Ve).

**8.** Procédé selon la revendication 6, dans lequel on utilise une correction d'erreur de la boucle à verrouillage de phase tel que la composante de tension globale de sortie de la partie AC (Ve) est donnée par la formule :

$$V_e = V_{ePLL} + K_{PLL} \sum_{i=1}^{N} \left( \int_0^1 E_{Zi} dt \right)$$

avec :

• $K_{PLL} \sum_{i=1}^{N} \left( \int_0^1 E_{Zi} dt \right)$ **:** terme de correction,

• $K_{PLL}$ : gain d'ajustage positif

• $E_{Zi}$ : erreur de suivi du carré de la tension DC.

**9.** Procédé selon la revendication 6, dans lequel on utilise un convertisseur « chain link STATCOM » sur chaque phase d'un réseau triphasé.

**Patentansprüche**

**1.** System zum Steuern von zumindest einem Spannungsumrichter mit mehreren Zellen (12) in Reihe, wobei jeder Zelle Modul- und Phasenkomponenten einer Eingangsspannung Vei bezüglich eines Bezugssystems (d, q) ausgegeben werden, enthaltend einen AC-Anteil (13) und einen DC-Anteil (14), **dadurch gekennzeichnet, dass** es eine Stromsteuerschleife mit schneller Dynamik (20) bezüglich des AC-Anteils (13) aufweist, die eine Steuerspannung Ve ausgibt, sowie eine Spannungssteuerschleife mit langsamerer Dynamik (21) bezüglich der Zellen (12), die eine Wirkleistung $\psi i$ ausgibt; so dass

$$\Psi_i = \frac{C_i}{2} \left( \frac{2}{R_{pi} C_i} Z_i + \frac{d}{dt} Z_{i\_ref} - K_{1Zi} \, E_{Zi} - K_{2Zi} \, sign(E_{Zi}) \right)$$

worin:

• $K_{1zi}$ und $K_{2zi}$ positive Anpassungsverstärkungen sind,

• $C_i$: Dauerkapazität des Kondensators Ci einer jeden Zelle,

• $R_{pi}$: jeder Zelle zugeordnete Verluste

• $Z_{i\text{-ref}}$: Bezugswert von $Zi = (U_{DCi})^2$, wobei $U_{DCi}$ die Gleichspannung an den Anschlüssen des Kondensators $C_i$ ist,
• $E_{zi}$: derart, dass $E_{zi} = Z_i - Z_{i\text{-ref}}$ ist,

dass die Verbindung zwischen diesen beiden Steuerschleifen (20, 21) über den Verbrauch an Wirkleistung in den Zellen (12) erhalten wird, der den Ausgang der Steuerschleife mit langsamerer Dynamik (21) darstellt,

und dass es Mittel zum Erhalten eines Stromreferenzwertes $i^d_{e-ref}$ für die Steuerschleife mit schneller Dynamik (20) enthält, indem die Summierung $\sum \psi_i$ der Verbrauchswerte an Wirkleistung in den N Zellen erfolgt mit

$$i^d_{e\_ref} = \frac{\sum_{i=1}^{N} \Psi_i - V_e^q \, i^q_{e\_ref}}{V_e^d}$$

und indem eine Phasenverriegelungsschleife (25) an der Steuerspannung $V_e$ verwendet wird.

2. System nach Anspruch 1, enthaltend eine Phasenverriegelungsschleife an der gesamten Ausgangsspannungskomponente des AC-Anteils (Ve).

3. System nach Anspruch 1, enthaltend ein Fehlerkorrekturmodul für die Phasenverriegelungsschleife (35) derart, dass die gesamte Ausgangsspannungskomponente des AC-Anteils (Ve) angegeben wird mit der Formel:

$$V_e = V_{ePLL} + K_{PLL} \sum_{i=1}^{N} \left( \int_0^1 E_{Zi} dt \right)$$

mit

• $K_{PLL} \sum_{i=1}^{N} \left( \int_0^1 E_{Zi} dt \right)$ : Korrekturterm
• $K_{PLL}$: Anpassungsverstärkung
• $E_{Zi}$: Folgefehler des Quadrats der DC-Spannung.

4. System nach einem der vorangehenden Ansprüche, enthaltend ein Modul zum Ausgeben von Modul- und Phasenkomponenten bezüglich eines Bezugssystems (d, q) an die Zellen.

5. System nach Anspruch 1, enthaltend einen Umrichter "chain link STATCOM" an jeder Phase eines Dreiphasennetzes.

6. Verfahren zum Steuern zumindest eines Spannungsumrichters mit mehreren Zellen (12) in Reihe, wobei jeder Zelle die Modul- und Phasenkomponenten einer Eingangsspannung $V_{ei}$ bezüglich eines Bezugssystems (d, q) ausgegeben werden, enthaltend einen AC-Anteil (13) und einen DC-Anteil (14), **dadurch gekennzeichnet, dass** die AC-Eingangsspannung (Vei) einer jeden Zelle direkt ermittelt wird, indem eine Stromsteuerschleife mit schneller Dynamik (20) bezüglich des AC-Anteils (13) verwendet wird, die eine Steuerspannung $V_e$ ausgibt, sowie eine Spannungs-steuerschleife mit langsamerer Dynamik (21) bezüglich der Zellen (12), die eine Wirkleistung $\psi i$ ausgibt; so dass

$$\Psi_i = \frac{C_i}{2} \left( \frac{2}{R_{pi} C_i} Z_i + \frac{d}{dt} Z_{i\_ref} - K_{1Zi} E_{Zi} - K_{2Zi} \, sign(E_{Zi}) \right)$$

worin:

- $K_{1zi}$ und $K_{2zi}$ positive Anpassungsverstärkungen sind,
- $C_i$: Dauerkapazität des Kondensators Ci einer jeden Zelle,
- $R_{pi}$: jeder Zelle zugeordnete Verluste,
- $Z_{i\text{-ref}}$: Bezugswert von $Z_i = (U_{DCi})^2$, wobei $U_{DCi}$ die Gleichspannung an den Anschlüssen des Kondensators $C_i$ ist,
- $E_{zi}$: derart, dass $E_{zi} = Z_i - Z_{i\text{-ref}}$ ist,

dass die Verbindung zwischen den beiden Steuerschleifen (20, 21) über den Verbrauch an Wirkleistung in den Zellen (12) erhalten wird, der den Ausgang der Steuerschleife mit langsamerer Dynamik (21) darstellt,

und dass ein Stromreferenzwert $i_{e-ref}^d$ für die Steuerschleife mit schneller Dynamik erhalten wird, indem die Summierung $\sum \psi_i$ der Verbrauchswerte an Wirkleistung in den N Zellen erfolgt mit

$$i_{e\_ref}^d = \frac{\displaystyle\sum_{i=1}^{N} \Psi_i - V_e^q i_{e\_ref}^q}{V_e^d}$$

und indem eine Phasenverriegelungsschleife (25) an der Steuerspannung $V_e$ verwendet wird.

7. Verfahren nach Anspruch 6, wobei eine Phasenverriegelungsschleife an der gesamten Ausgangsspannungskomponente des AC-Anteils (Ve) angewendet wird.

8. Verfahren nach Anspruch 6, wobei eine Fehlerkorrektur für die Phasenverriegelungsschleife verwendet wird, derart, dass die gesamte Ausgangsspannungskomponente des AC-Anteils (Ve) angegeben wird mit der Formel:

$$V_e = V_{ePLL} + K_{PLL} \sum_{i=1}^{N} \left( \int_0^1 E_{Zi} dt \right)$$

mit

- $K_{PLL} \displaystyle\sum_{i=1}^{N} \left( \int_0^1 E_{Zi} dt \right)$ : Korrekturterm
- $K_{PLL}$: positive Anpassungsverstärkung
- $E_{Zi}$: Folgefehler des Quadrats der DC-Spannung.

9. Verfahren nach Anspruch 6, wobei ein Umrichter "chain link STATCOM" an jeder Phase eines Dreiphasennetzes angewendet wird.

**Claims**

1. A control system for at least one voltage converter having a plurality of cells (12) in series wherein the module and phase components of an input voltage Vei relative to a frame of reference (d, q) are delivered to each cell, comprising an AC part (13) and a DC part (14), **characterized in that** it includes a high speed current control loop (20) relating to the AC part (13) that delivers a control voltage Ve, and a lower speed voltage control loop (21) relating to the cells (12) that delivers an active power $\psi_i$, such that:

$$\Psi_i = \frac{C_i}{2}\left(\frac{2}{R_{pi}C_i}Z_i + \frac{d}{dt}Z_{i\_ref} - K_{1Zi}E_{Zi} - K_{2Zi}\,sign\bigl(E_{Zi}\bigr)\right)$$

where:

- $K_{1zi}$ and $K_{2zi}$ are positive adjustment gains;
- $C_i$ is the continuous capacitance of the capacitor Ci of each cell;
- $R_{pi}$ is the losses associated with each cell;
- $Z_{i\_ref}$ is the referenced value of $Z_i=(U_{Dci})^2$, $U_{DCi}$ being the direct voltage across the capacitor $C_i$; and
- $E_{Zi}$ is such that $E_{Zi}=Z_i-Z_{i\_ref}$,

**in that** the link between these two control loops (20, 21) is obtained via the consumption of active power in the cells (12) representing the output of the lower speed control loop (21), and

**in that** it comprises means for obtaining a current reference $i_{e\_ref}^{d}$ for the high speed control loop (20), by

effecting the summation $\Sigma\psi_i$ of the active power consumptions in the N cells with $i_{e\_ref}^{d} = \dfrac{\displaystyle\sum_{i=1}^{N}\Psi_i - V_e^{q}\,i_{e\_ref}^{q}}{V_e^{d}}$,

and by making use of a phase locked loop (25) on the control voltage $V_e$.

2. A system according to claim 1, including a phase locked loop on the total output voltage component (Ve) of the AC part.

3. A system according to claim 1, including a module (35) for error correction in the phase locked loop, such that the total output voltage component (Ve) of the AC part is given by the following equation:

$$V_e = V_{ePLL} + K_{PLL}\sum_{i=1}^{N}\left(\int_0^1 E_{Zi}dt\right)$$

where:

- $K_{PLL}\displaystyle\sum_{i=1}^{N}\left(\int_0^1 E_{Zi}dt\right)$ is a correction term;
- $K_{PLL}$ is the adjustment gain; and
- $E_{Zi}$ is the error in tracking the square of the DC voltage.

4. A system according to any preceding claim, including a module for delivering to the cells module and phase components relative to a frame of reference (d, q).

5. A system according to claim 1, comprising a chain link STATCOM converter on each phase of a three-phase power distribution network.

6. A method of controlling at least one voltage converter having a plurality of cells (12) in series, wherein the module and phase components of an input voltage Vei relative to a frame of reference (d, q) are delivered to each cell, comprising an AC part (13) and a DC part (14), **characterized in that** the AC input voltage (Vei) of each cell is determined directly by the use of a high speed current control loop (20) relating to the AC part (13) that delivers a control voltage Ve and a lower speed voltage control loop (21) relating to the cells (12) that delivers an active power $\psi_i$, such that:

$$\Psi_i = \frac{C_i}{2}\left(\frac{2}{R_{pi}C_i}Z_i + \frac{d}{dt}Z_{i\_ref} - K_{1Zi}E_{Zi} - K_{2Zi}\,sign\!\left(E_{Zi}\right)\right)$$

where:

- $K_{1zi}$ and $K_{2zi}$ are positive adjustment gains;
- $C_i$ is the continuous capacitance of the capacitor Ci of each cell;
- $R_{pi}$ is the losses associated with each cell;
- $Z_{i\_ref}$ is the referenced value of $Z_i=(U_{DCi})^2$, $U_{DCi}$ being the direct voltage across the capacitor $C_i$; and
- $E_{Zi}$ is such that $E_{Zi}=Z_i-Z_{i\_ref}$,

**in that** the link between the two control loops (20, 21) is obtained via the consumption of active power in the cells (12) representing the output of the lower speed control loop (21), and

**in that** a current reference $i^d_{e\_ref}$ is derived for the high speed control loop, by effecting the summation $\sum\psi_i$

of the active power consumptions in the N cells with $\quad i^d_{e\_ref} = \dfrac{\displaystyle\sum_{i=1}^{N}\Psi_i - V^q_e\,i^q_{e\_ref}}{V^d_e}\quad$ and by making use of a phase locked loop (25) on the control voltage $V_e$.

7. A method according to claim 6, including the use of a phase locked loop on the total output voltage component (Ve) of the AC part.

8. A method according to claim 6, wherein use is made of error correction in the phase locked loop (25), such that the total output voltage component (Ve) of the AC part is given by the following equation:

$$V_e = V_{ePLL} + K_{PLL}\sum_{i=1}^{N}\left(\int_0^1 E_{Zi}\,dt\right)$$

where:

- $K_{PLL}\displaystyle\sum_{i=1}^{N}\left(\int_0^1 E_{Zi}\,dt\right)$ is a correction term;
- $K_{PLL}$ is the adjustment gain; and
- $E_{Zi}$ is the error in tracking the square of the DC voltage.

9. A method according to claim 6, wherein a chain link STATCOM converter is used on each phase of a three-phase power distribution network.

FIG.1

FIG.2

FIG.3

FIG.4

FIG.5

FIG.6

FIG.7

FIG.8A

FIG.8B

FIG.8C

FIG.9A

FIG.9B

FIG.9C

FIG.10A

FIG.10B

FIG.11A

FIG.11B

FIG.12A

FIG.12B

FIG.13A

FIG.13B

FIG.14A

FIG.14B

FIG.14C

FIG.15A

FIG.15B

FIG.16A

FIG.16B

FIG.16C

FIG.17A

FIG.17B

FIG.18A

FIG.18B

FIG.18C

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. BENCHAIB ; E. LEE-KWET-SUN ; J-L. THIERRY ; G. DE PREVILLE.** Industrial D-STATCOM chain link Modelling and control. *12th European Conférence on Power Electronics and applications,* 02 Septembre 2007
- **NITRUS VORAPHONPIPUT ; TERATAM BUNYAGUL ; SOMCHAI CHATRATANA.** Analysis and Performance Investigation of a Cascaded Multilevel STATCOM for Power System Voltage Régulation. *Energy for Sustainable Development,* Mars 2006
- **M.S. EL-MOUMI ; A. M. SHARAF.** Novel Controller for the 48-Pulse VSC STATCOM and SSSC for Voltage Regulation and Reactive Power Compensation. *IEEE Transactions an Power Systems,* Novembre 2005, vol. 20 (4), 1985-1997